# EUROPEAN PATENT APPLICATION

(11) **EP 2 732 971 A1**
(43) Date of publication of application: **21.05.2014**
(21) Application number: 12380051.8
(22) Date of filing: 16.11.2012
(51) Int. Cl.: B32B 27/20, C08J 7/04

(54) **Sheets with lacquer**

(71) Applicant: Renolit Iberica S.A., 08470 Sant Celoni Barcelona (ES)
(72) Inventor: Tanghe, Hans, 8470 Sant Celoni (ES)
(74) Representative: Wagner, Jutta

(57) **Abstract**

The present invention relates to a sheet coated with a lacquer containing pigments that are resistant to water containing disinfectants and its use as a swimming pool liner. The invention further relates to a method for manufacturing sheets suitable as swimming pool liners, comprising providing a base sheet and coating it with a lacquer containing pigments that are resistant to water containing disinfectants.

## Description

The present invention relates to a sheet coated with a lacquer containing pigments that are resistant to water containing disinfectants and its use as a swimming pool liner. The invention further relates to a method for manufacturing sheets suitable as swimming pool liners, comprising providing a base sheet and coating it with a lacquer containing pigments that are resistant to water containing disinfectants.

Because of their ease of installation and low cost, flexible plastic sheets are regularly used to line swimming pools. In practically all cases, swimming pool liner sheets are made from plasticized polyvinyl chloride (PVC).

Sometimes these sheets are white and printed with a pattern, such as to imitate mosaic tiles, but most often they have a plain colour, such as white, green, blue, grey or black. Generally, the sheets contain common pigments that have a low resistance to the chlorine that is used to disinfect the swimming pool water and as a consequence they bleach rapidly. Chlorine resistant pigments do exist, but they are generally too expensive to be used in swimming pool liners.

Swimming pool liner sheets must have a rather high opacity, as swimmers do not want to see the pool structure right through the sheet. Moreover, plasticized PVC with high transparency bleaches because of humidity absorption and has low UV resistance.

In order to obtain high opacity and to keep the sheet cost at an acceptable level, only pigments with high colouring power can be used to colour the sheet. Common pigments used are PB15 and PBk6 available from BASF SE, which have a rather low chlorine resistance and as such bleach easily once they come into a swimming pool environment.

Some inorganic pigments such as blue PB28 and PB36, and green PG50 and PG17 available from The Shepherd Color Company, Heubach GmbH are known for their high resistance, but they have low colouring capacity. High opacity can only be obtained by using high loads of pigment, which leads to high costs.

Sometimes the sheets are protected with a lacquer based on acrylic or vinylic resins. Lacquer thicknesses generally range from 1 to 10 µm. These lacquers are transparent and help to protect against staining and ageing. Lacquers have practically no effect against aggressive disinfecting chemicals such as chlorine, because the chemicals pass right through the lacquer and bleach the pigments in the base sheet.

Surprisingly it was now found that flexible plastic sheets used to line swimming pools can be coated with a lacquer containing pigments that are highly resistant to disinfectants, wherein the lacquer provides at least part of the colouring. As such a coating is quite thin compared to the total sheet thickness, the pigment cost of the coated sheet is maintained low, while the bleaching resistance of the sheet is significantly improved.

The present invention solves the above described problem by providing a sheet coated with a lacquer containing pigments that are resistant to water containing a disinfectant.

Suitable sheets are known per se. Typically they are PVC sheets. A useful composition to manufacture sheets by calendering contains per 100 parts PVC, 1 to 3 parts stabilizer, 45 to 70 parts plasticizer and optionally but preferably pigments in an amount from 3 to 10 parts and/or additives like UV stabilizers, manufacturing aids such as oils, etc. in the known amounts, all parts per weight and relative to the total composition.

The sheets may include a reinforcement, usually meshes or woven textiles are used, most often from polyester. Such reinforcement is normally embedded between two sheets.

Typical sheet thicknesses range from 0.5 mm to 2 mm. Preferred are 0.5 to 0.85 mm for homogenous sheets and from 1.0 mm to 2.0 mm, preferably from 1.2 mm to 1.8 mm and most preferred about 1.5 mm for reinforced membranes (composed of 2 layers of about 0.75 mm, with a polyester woven mesh in between).

Requirements for PVC sheets as considered applicable today are defined e.g. in EN 15836. The properties of the base sheet are not determining with regard to the invention, however. They can be adjusted as suitable for a specific application.

The sheets of the prior art are pigmented to render the sheet opaque and provide the design of the liner, which at the same time provides some UV protection. According to the invention the sheets do not provide the design of the liner. Pigments are typically contained to provide the background. These pigments can be and preferably are low cost pigments. Useful pigments are e.g. PB15 and PBk6 available from BASF SE. Although they bleach with time, this is almost invisible, because according to the invention the design is provided by the lacquer.

The sheet according to the invention comprises a lacquer coated on top of the sheet for providing the design of the liner. Concurrently, the lacquer provides protection against staining (sun cream, atmospheric pollution,...) and ageing. Suitable materials are based on acrylic or vinylic resins. Useful thicknesses of the lacquer are from 1 to 30 µm, preferably from 10 to 20 µm.

According to the invention, the lacquer provides the design of the liner. To this end, pigments that are highly resistant against degradation by disinfectant are mixed into the lacquer. These pigments are costly, but since the lacquer layer is thin, the total amount of pigment needed is low. This leads to a significant cost gain compared to adding stable pigments into the base sheet. Pigments like blue PB28 and PB36, and green PG50 and PG17 available from The Shepherd Color Company, Heubach GmbH are suitable for the lacquer.

Generally, the lacquer is applied to the sheet in the form of a solution or dispersion. A typical lacquer solution or dispersion comprises from 10 to 20 parts resin, e.g. PVC or polyacryl, from 3 to 10 parts pigment or mixture of pigments and from 70 to 85 parts solvent, for example but not exclusively methyl ethyl ketone (MEK), acetone or toluene, all parts per weight and relative to the total composition. Other possible ingredients are: dispersing agents, additives to improve the scratch resistance of the lacquer, matting agents etc. which can be added as known.

The lacquer can be applied in a manner know as such, e.g. by printing, spraying, painting with a brush, roller, doctor knife etc., preferably by printing. Heliographic printing is especially preferred. It is possible and preferred to apply the lacquer in several layers. On the one hand, several, like two or three, thin layers are easier to apply homogeneously and dry faster. On the other hand, applying several layers enables a higher design choice.

Manufacturing of the sheets according to the invention can be accomplished according to known methods. A preferred method is calendering a sheet, optionally laminating it with a reinforcing mesh or textile, and coating it with the lacquer.

The sheets are especially suitable as swimming pool liners. They can be installed in the known manner and have a significantly longer life time without discolouring than sheets of comparable costs with pigments prone to discolouring. They also incur significantly lower costs compared to sheets with pigments that are resistant to disinfectant and provide the same life time as sheets of the invention.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

A blue coloured, flexible PVC sheet (Calendered sheet "A") of 0.75 mm thickness was produced by calendering the following formulation:

| | |
|---|---|
| PVC K70 | 100 parts |
| Ca/Zn stabilizer | 2 parts |
| Epoxidized soybean oil | 3 parts |
| DIDP | 65 parts |
| Pigment white PW 6 | 5 parts |
| Pigment blue PB15 | 1 part. |

A white lacquer was prepared with the following formulation:

| | |
|---|---|
| Acrylic polymer | 9 parts |
| Vinylic polymer | 9 parts |
| Pigment white PW6 | 6 parts |
| Solvent MEK | 76 parts. |

A blue lacquer was prepared with the following formulation:

| | |
|---|---|
| Acrylic polymer | 9 parts |
| Vinylic polymer | 9 parts |
| Pigment blue PB28 | 6 parts |
| Solvent MEK | 76 parts. |

By a standard heliographic printing process, the calendered sheet "A" was first lacquered with one layer of white lacquer (about 4 µm after drying) and then with three layers of blue lacquer (about 12 µm after drying). This resulted in a blue sheet with a blue lacquer finish "AA" having high chlorine resistance.

### Example 2

Two grey coloured, flexible PVC sheets (calendered sheet "B") of 0.75 mm thickness were produced by calendering the following formulation:

| | |
|---|---|
| PVC K70 | 100 parts |
| Ca/Zn stabilizer | 2 parts |
| Epoxidized soybean oil | 3 parts |
| DIDP | 65 parts |
| Pigment white PW 6 | 5 parts |
| Pigment black PBk6 | 0.3 parts. |

A grey lacquer was prepared with the following formulation:

| | |
|---|---|
| Acrylic polymer | 9 parts |
| Vinylic polymer | 9 parts |
| Pigment blue PB36 | 5 parts |
| Pigment green PG50 | 2 parts |
| Pigment red PR101 | 1 part |
| Pigment white PW 6 | 2 parts |
| Solvent MEK | 72 parts. |

By a standard heliographic printing process, the first grey calendered sheet "B" was lacquered with three layers of grey lacquer (about 12 µm after drying). This resulted in a grey sheet with a grey lacquer finish. Then, this sheet was laminated to the second grey calendered sheet with a standard polyester mesh in between, providing a 1.5 mm membrane "BB".

### Example 3

The sheets "A", "AA", "B", and "BB" were subjected to the following tests. The sheet was submersed in water containing 10 ppm chlorine at pH 7, during 6 months at room temperature. Colour change was measured with a standard spectrophotometer. Both formulations "A" and "B" according to the prior art have discoloured severely. Colour change ranges between a ΔE of 10 to 20 (ΔE according to standard international CIELAB convention). Both lacquered products "AA" and "BB" according to the invention show little or no discolouring. The measured ΔE ranges from 1 to 3.

## Claims

1. Sheet coated with a lacquer containing pigments that are resistant to water containing a disinfectant.

2. Sheet according to claim 1, **characterized in that** it is a PVC sheet.

3. Sheet according to claim 1 or 2, **characterized in that** it comprises a reinforcement, preferably from polyester, in particular a polyester mesh or fabric.

4. Sheet according to any one of claims 1 to 3, **characterized in that** the thickness ranges from 0.5 mm to 2.0 mm, preferably from 0.5 mm to 0.85 mm for unreinforced sheets and from 1.0 to 2.0 mm for reinforced sheets.

5. Sheet according to any one of claims 1 to 4, **characterized in that** the lacquer is based on acrylic or vinylic resins.

6. Sheet according to any one of claims 1 to 5, **characterized in that** the lacquer has a thickness from 1 to 30 µm, preferably from 10 to 20 µm.

7. Method for manufacturing sheets which are suitable as swimming pool liner, **characterized in that** a base sheet is provided and coated with a lacquer containing pigments that are resistant to water containing a disinfectant.

8. Method according to claim 7, **characterized in that** the base sheet is from PVC, preferably made by calendering the PVC sheet.

9. Method according to claim 7 or 8, **characterized in that** the base sheet comprises a laminated reinforcement, preferably a laminated polyester mesh or fabric.

10. Method according to any one of claims 7 to 9, **characterized in that** the lacquer is applied by printing, spraying, painting with a brush, roller, doctor knife etc., preferably by printing, especially preferred by heliographic printing.

11. Method according to any one of claims 7 to 10, **characterized in that** the lacquer is applied in several layers, preferably in two, three, four or five layers, especially preferred in two or three layers.

12. Method according to any one of claims 7 to 11, **characterized in that** the lacquer provides the design of the liner.

13. Use of a sheet according to any one of claims 1 to 6 as swimming pool liner.
